# EUROPEAN PATENT SPECIFICATION

(11) **EP 3 328 711 B1**
(45) Date of publication and mention of the grant of the patent: **09.02.2022**
(21) Application number: 16751696.2
(22) Date of filing: 26.07.2016
(51) Int. Cl.: B62D 1/184

(54) **HYDRAULIC POWER STEERING SYSTEM WITH VARIABLE DISPLACEMENT HYDRAULIC DISTRIBUTOR FOR MODULAR TRAILERS**
HYDRAULISCHE SERVOLENKUNG MIT VARIABLEM VERSTELLENDEN HYDRAULISCHEN VERTEILER FÜR MODULARE ANHÄNGER
DIRECTION ASSITÉE AVEC UN DISTRIBUTEUR HYDRAULIQUE À DÉPLACEMENT POUR REMORQUES MODULAIRES

(30) Priority: 27.07.2015 TR 201509265
(43) Date of publication of application: 06.06.2018
(73) Proprietor: Tirsan Treyler Sanayi Ve Ticaret Anonim Sirketi, 54580 Sakarya (TR)
(72) Inventor: HASCELIK, Safak, 54580 Arifiye/Sakarya (TR); OGUZ, Oguzhan, 54580 Arifiye/Sakarya (TR)
(74) Representative: Yamankaradeniz, Kemal
(86) International application number: PCT/TR2016/050237
(87) International publication number: WO 2017/018956

(56) References cited:
- WO-A1-89/10293
- US-A1- 2009 273 159

## Description

### TECHNICAL FIELD

Present invention relates to steering systems of vehicles named as modular trailers that are used to transport oversized and heavy cargo.

Present invention particularly relates to hydraulic modular steering systems of modular trailers, changing steering angles through a hydraulic system by using any variable displacement hydraulic distributor system, rather than by switching mechanical connections.

### BACKGROUND OF THE INVENTION

In the current state of the art, vehicles named as modular trailers are used to transport oversized industrial machine components, marine vessels at dockyards, oil rigs at oil fields, oversized cargo such as rectors at oil refineries and all other kinds of oversized heavy loads from one point to another. Modular trailers are attached to tractor trucks by a rotary plate.

The main feature of modular trailers is a wide and robust modular platform allowing transportation of oversized and heavy loads and a multi axle mechanism carrying and moving this platform under heavy load. Turning angle of each axle on the multi axle modular trailer must be different from others by nature. Consequently, the turning angle of the wheels of each individual modular platform on the trailer is different from that of others. In principle, the turning angle of rear wheels is wider than that of front wheels. Turning angle of each individual axle must be calculated on the basis of the number of modular platforms used, in order for the modular trailer to turn in synchronization.

The power steering system used in modular trailers is a hydro-mechanical steering system. Steering angles are dependent on the hydraulic and mechanical systems in hydro-mechanical steering systems. The operator can use different platform configurations as required in modular trailers. In cases where the operator intends to change the positions of detachable platforms or to remove such platforms from the trailer configuration completely, steering angles must be adjusted according to this new trailer configuration.

Modular trailer structures that are currently available in the market are deficient in various aspects such as:
- Steering angles can only be altered mechanically. The positions of mounting holes for tie rods and steering rods of the steering mechanism, that are located on steering center link must be changed by the operator according to predetermined tables and instructions. This is a tedious and time consuming process.
- Competent mechanics are required to be employed on a full time basis to alter steering angles mechanically.
- The positions of mounting holes for tie rods and steering rods of the steering mechanism, that are located on steering center link must be changed to alter steering angles. Mounting holes must be identified correctly at the time of making the change. Abundant number of holes might cause confusion or mistakes when installing the tie rod and steering rod.
- Any mistake made while changing the position of the mounting holes of the rods on the steering center link might cause serious damage on the steering mechanism. This might also cause dangerous situations when transporting heavy cargo.
- Ball joint nuts and bolts might be deformed as a result of constant installation and removal operations when changing the mounting positions of tie rods and steering rods.
- It is very difficult to determine the number and positions of the holes on the steering center links at the design stage to find optimum steering angles for replaceable or removable modular platform combinations. It is even impossible to develop a solution in certain cases. Mechanical restrictions make it difficult to develop optimum solutions.

A patent application numbered as US 2009273159 A1 relates like the invention to multi-axle transport vehicles for moving heavy loads, and more particularly to a dual lane multi-axle transport vehicle. The transport vehicle disclosed in the document is guided by steering cylinders driving the hydraulic actuators, and steering angles and rear steering cylinders connected to the module platforms are directed via actuator with variable piston rooms inside. In guidance system, front axles are controlled at first place. Rear axles are controlled by steering arms connected between front axles and rear axles.

The rotating angle of rear axles is determined with the help of a mechanical part connected between front axles.

Consequently, new structures are required, that will eliminate above mentioned disadvantages regarding steering mechanisms of modular trailers and provide solutions to systems that are currently available at the market.

### OBJECTIVE OF INVENTION

Present invention relates to a hydraulic based modular steering system meeting all of the above mentioned requirements, eliminating all disadvantages and introducing several additional advantages.

Primary objective of present invention is to be capable of changing steering angles of hydro-mechanical steering systems used on modular trailers through a hydraulic system rather than a mechanical system.

Another objective of present invention is to be capable of changing steering angle of modular trailers by using hydraulic actuators and/or any other variable displacement hydraulic distributor system.

A further objective of present invention is to be capable of changing steering angles in a simpler and quicker way through "A Variable Displacement Hydraulic Distributor System".

It will possible for the customer to change the position of the hoses on the Variable Displacement Hydraulic Distributor System by carrying out a simple procedure without the need for a technician. "Hydraulic quick couplings" will be used for this purpose.

A further objective of present invention will be to eliminate the need for mechanical modifications to change steering angles of modules in cases where module configurations are altered.

Present invention aims at eliminating the mistakes and the risk of causing damage as a result of changing the positions of mounting holes for ties rods and steering rods on steering center link erroneously, which is common in current practice.

A further objective of present invention is to eliminate deformation sustained by ball joint nuts and bolts as a result of constant installation and removal operations when changing the mounting positions of tie rods and steering rods.

It is aimed to eliminate restrictions or deadlocks encountered in designing steering mechanisms with a view to finding optimum steering angles for different modular platform configurations.

Present invention relates to a hydraulic steering system for vehicles named as modular trailers that are used to transport all kinds of oversized and heavy loads from one point to another, the payload or number of axles of which can be altered by increasing or reducing the number of their module platforms, with a view to providing all advantages that are mentioned in the foregoing and described in detail here below. Present invention discloses the features according to claim 1.

Structural and characteristic features of present invention can be understood clearly with the help of following diagrams and detailed descriptions providing reference to these diagrams and thus assessment of the patent should be made by reading this application together with this diagram and detailed description.

### DIAGRAMS DESCRIBING INVENTION

Present invention should be assessed together with the diagrams that are described here below in order to have thorough understanding of the structure of present invention as well as its auxiliary components and the advantages it offers.
- **Diagram 1** ;: Schematic view of modular trailer hydraulic steering system constituting the subject of present invention.
- **Diagram 2** ;: Top profile view of the gooseneck steering mechanism in the modular trailer hydraulic steering system constituting the subject of present invention. View A depicts front steering cylinders and view B depicts hydraulic actuator.
- **Diagram 3** ;: Top profile view of module platform steering mechanism of modular trailer hydraulic steering system constituting the subject of present invention.
- **Diagram 4** ;: Isometric view of variable displacement hydraulic distributor actuator of modular trailer hydraulic steering system constituting the subject of present invention.
- **Diagram 5** ;: Front profile, front profile A-A section, top profile and side profile views of the variable displacement hydraulic distributor actuator of modular trailer hydraulic steering system constituting the subject of present invention in the respective order.
- **Diagram 6** ;: Side profile section view inside the housing of the variable displacement hydraulic distributor actuator of modular trailer hydraulic steering system constituting the subject of present invention.
- **Diagram 7** ;: Schematic view of driving mode steering and externally driven external steering.

### DESCRIPTION OF REFERENCES

- **1.**: Variable Displacement Hydraulic Distributor Actuator (VDHDA)
- 2.: Actuator housing
- 3.: Drive Shaft
- 4.: Piston Chambers
- 4.1.: Gooseneck Drive Compartment Chamber
- 4.2.: First Platform Chamber
- 4.3.: Second Platform Chamber
- 4.4.: Third Platform Chamber
- 4.5.: Fourth Platform Chamber
- 5.: Chamber Pistons
- 5.1.: Gooseneck Drive Chamber Piston
- 5.2.: First Chamber Piston
- 5.3.: Second Chamber Piston
- 5.4.: Third Chamber Piston
- 5.5.: Fourth Chamber Piston
- 6.: Chamber Walls
- 6.1.: Gooseneck Drive Chamber Wall
- 6.2.: First Chamber Wall
- 6.3.: Second Chamber Wall
- 6.4.: Third Chamber Wall
- 6.5.: Fourth Chamber Wall
- 7.: Pre Filling Valves
- 7.1.: Pre Filling Valve-X1
- 7.2.: Pre Filling Valve -X2
- 7.3.: Pre Filling Valve -X3
- 7.4.: Pre Filling Valve -X4
- 8.: Deactivation Valves
- 8.1.: Deactivation Valve-V1
- 8.2.: Deactivation Valve-V2
- 8.3.: Deactivation Valve-V3
- 8.4.: Deactivation Valve-V4
- 9.: Hydraulic Fluid Inlet/Outlet Ports
- 9.1.: Gooseneck Drive Chamber Left Hydraulic Fluid Port
- 9.2.: Gooseneck Drive Chamber Right Hydraulic Fluid Port
- 9.3.: First Chamber Left Hydraulic Fluid Port
- **9.4.**: First Chamber Right Hydraulic Fluid Port
- **9.5.**: Second Chamber Left Hydraulic Fluid Port
- **9.6.**: Second Chamber Right Hydraulic Fluid Port
- **9.7.**: Third Chamber Left Hydraulic Fluid Port
- **9.8.**: Third Chamber Right Hydraulic Fluid Port
- **9.9.**: Fourth Chamber Left Hydraulic Fluid Port
- **9.10.**: Fourth Chamber Right Hydraulic Fluid Port

- **10.**: Modular Trailer Steering System
- **20.**: Gooseneck Steering Mechanism
- **21.**: Front Steering Cylinders
- **22.**: Hydraulic Power Unit
- **23.**: Steering Valve Block
- **30.**: Shaft Side Actuator
- **40.**: Piston Side Actuator
- **50.**: Module Platform Steering Mechanism
- **51.**: Module Steering Cylinders
- **52.**: Platform 1 Steering Cylinders
- **53.**: Platform 2 Steering Cylinders
- **54.**: Platform 3 Steering Cylinders
- **55.**: Platform 4 Steering Cylinders

- **70.**: Driving Mode Steering Function
- **80.**: Externally Driven Forced Steering Function
- **A:**: Tractor Truck
- **T:**: Wheels
- **P:**: Module Platform

### DETAILED DESCRIPTION OF INVENTION

This detailed description explains preferred structures of the hydraulic steering system (10) constituting the subject of present invention, with the sole purpose of facilitating the comprehension of the subject without any restrictive effect.

Present invention relates to steering systems of vehicles named as modular trailers that are used to transport oversized industrial machine components, marine vessels at dockyards, oil rigs at oil fields, oversized cargo such as rectors at oil refineries and all other kinds of oversized heavy loads from one point to another. Present invention comprises a hydraulic modular steering system (10) changing steering angles through a hydraulic system by using any variable displacement hydraulic distributor system, rather than by using a mechanical system.

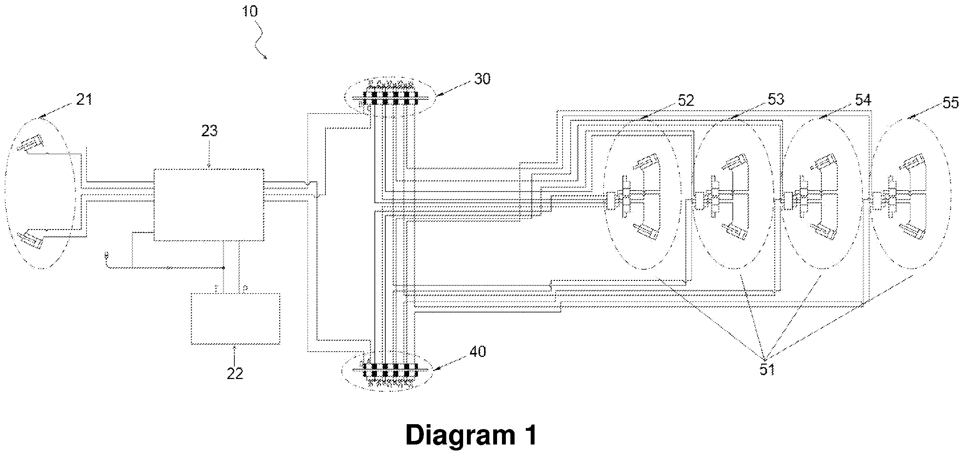

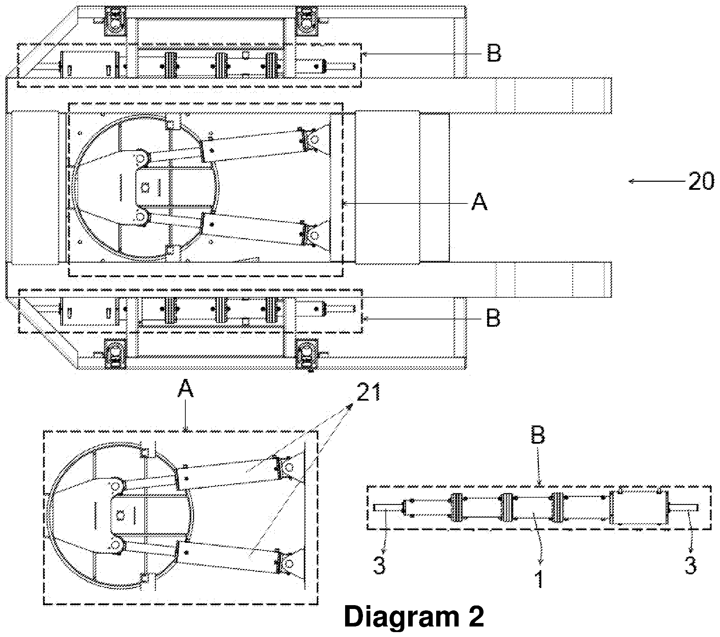

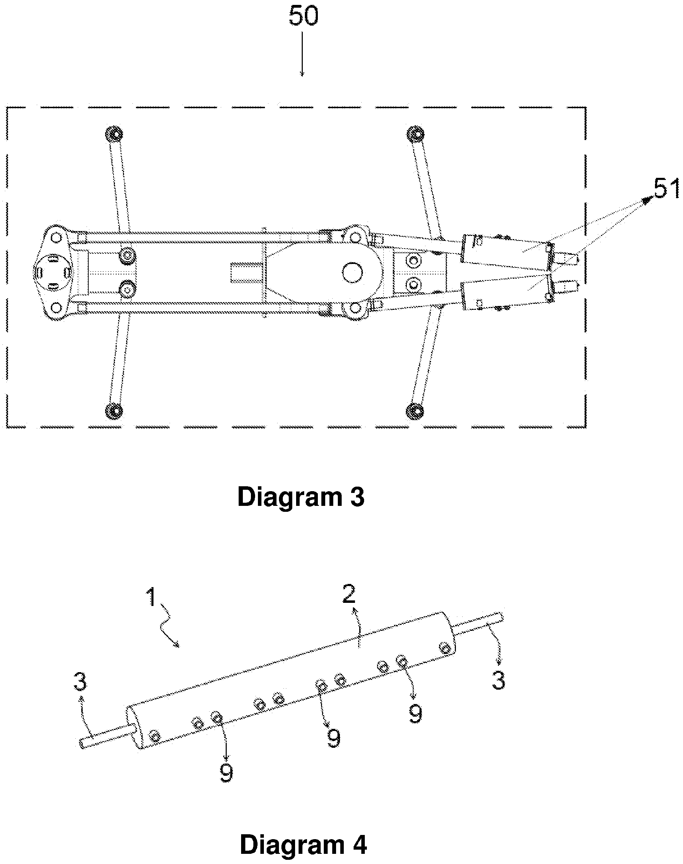

A schematic view of the modular trailer hydraulic steering system (10) constituting the subject of present invention is provided in Diagram 1. Accordingly, the hydraulic steering system (10) basically comprises;
- A minimum of one gooseneck steering mechanism (20) synchronizing the movement of the gooseneck with the tractor truck according to the direction of movement of the latter, (See Diagram 2)
- A minimum of one module platform steering mechanism (50) ensuring that each platform turns at the correct angle depending on the number of module platforms, (See Diagram 3)
- Gooseneck steering mechanism (20) and module platform steering mechanism (50) consist of a minimum of one variable displacement hydraulic distributor actuator (1) driven by a hydraulic system.

Hydraulic steering system (10) incorporates a hydraulic power unit (22) and steering valve block (23) as seen in diagram 1.

"Variable Displacement Hydraulic Distributor Actuator" will be shortly referred to as "actuator" hereinafter. Hydraulic steering system (10) makes sure that the wheels of multi axle modular trailer turn in synchronization with the trailer truck in the opposite direction of movement of the latter. The modular trailer application in Diagram 1 preferably has four module platforms. The number of module platforms on the modular trailer might vary depending on the field of application and the nature of the cargo to be transported. Although present invention is preferably described on a modular trailer sample incorporating four module platforms, it can be applied to modular trailers incorporating a different number of module platforms after necessary adjustments are made.

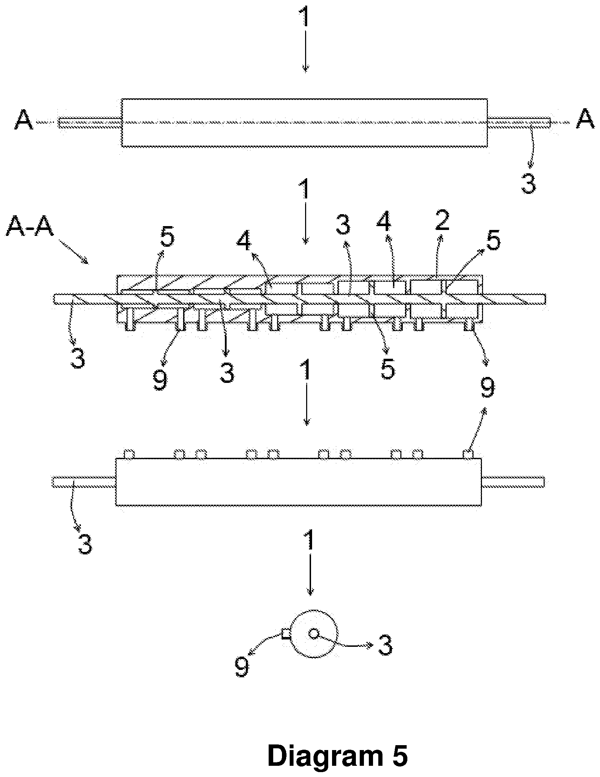

Isometric view of the actuator (1) used in the modular trailer hydraulic steering system (10) constituting the subject of present invention is provided in Diagram 4, and the front profile A-A section view, top profile view and side profile view thereof are provided in diagram 5 in the respective order. Accordingly, the said actuator (1) incorporates cylindrical actuator housing (2) and a drive shaft (3) located inside the said actuator housing (2). Chamber pistons (5), ensuring the gooseneck and modular platforms that are located on the modular trailer to turn at specified angles, are located inside the actuator housing (2). Said chamber pistons (5) operate inside piston chambers (4) that are located inside the actuator housing (2). Said piston chambers (4) are separated from each other by chamber walls (6). There are two hydraulic fluid inlet/outlet ports (9) on each piston chamber (4). Said hydraulic fluid inlet/outlet ports (9) constitute the connections that are necessary for inflow and outflow of hydraulic fluid to and from piston chambers (4).

Actuator (1) also incorporates pre filling valves (7) and deactivation valves (8). Pre filling valves (7) are opened during initial filling of hydraulic fluid to the actuator (1) or in case of loss of hydraulic fluid in order to pump hydraulic fluid to the respective piston chamber (4). Deactivation valves (8) on the other hand are used to deactivate chamber piston (4). When the deactivation valve (8) is open, hydraulic fluid circulates within the connected chamber (4), bypassing and deactivating the respective hydraulic line.

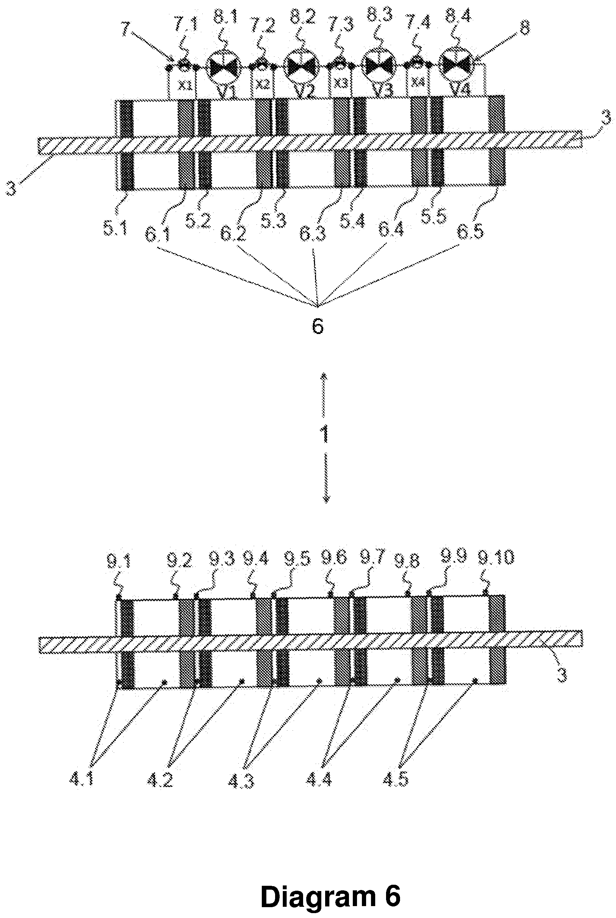

Diagram 6 provides side profile section view inside the housing (2) of the variable displacement hydraulic distributor actuator (1) of modular trailer hydraulic steering system (10) constituting the subject of present invention. Since present invention will preferably be used on a modular trailer incorporating four module platforms, the following components are located inside the actuator (1) to allow controlling each of those four modules and the gooseneck section individually;
- Five piston chambers (4), namely the gooseneck drive compartment chamber (4.1), first platform chamber (4.2), second platform chamber (4.3), third platform chamber (4.4) and fourth platform chamber (4.5),
- Five chamber pistons (5) operating inside above mentioned piston chambers (4), namely, the gooseneck drive chamber piston (5.1), first chamber piston (5.2), second chamber piston (5.3), third chamber piston (5.4) and fourth chamber piston (5.5),
- Five chamber walls (6) inside the actuator housing (2) to separate piston chambers (4) from each other, namely gooseneck drive chamber wall (6.1), first chamber wall (6.2), second chamber wall (6.3), third chamber wall (6.4) and fourth chamber wall (6.5),
- A total of ten hydraulic fluid inlet/outlet ports (9) for facilitating inflow and outflow of hydraulic fluid to and from piston chambers (4), namely, gooseneck drive chamber left hydraulic fluid port (9.1), gooseneck drive chamber right hydraulic fluid port (9.2), first chamber left hydraulic fluid port (9.3), first chamber right hydraulic fluid port (9.4), second chamber left hydraulic fluid port (9.5), second chamber right hydraulic fluid port (9.6), third chamber left hydraulic fluid port (9.7), third chamber right hydraulic fluid port (9.8), fourth chamber left hydraulic fluid port (9.9) and fourth chamber right hydraulic fluid port (9.10),
- Four pre filling valves (7) and four deactivation valves.

### Operating principle of the modular trailer hydraulic steering system (10) constituting the subject of present invention is described here below:

Individual wheels of articulated modular platforms are required to turn at different angles from each other according to Ackerman Principle in order to reduce friction during turning maneuvers of multi axle modular trailers. The rearmost wheel must have the widest turning angle and steering angles must be reduced gradually from the rear to the front hydro-mechanically. Furthermore, in some cases, all wheels of the foremost module are expected to turn in the opposite direction to rear wheels.

Variable displacement hydraulic distributor actuators (1) are used in the modular trailer hydraulic steering system (10) in order to vary wheel turning angles of individual modular platforms or steer module wheels in synchronization. The size of gooseneck hydraulic fluid chambers (4.1) of variable displacement hydraulic distributor actuators (1) is dependent only on the hydraulic fluid transmission volume of gooseneck front steering cylinders (21). Diameters of gooseneck chamber pistons (5.1) define the maximum operating stroke of the drive shaft (3).

The direction and angle of movement of the gooseneck section of the modular trailer hydraulic steering system (10) constituting the subject of present invention are determined by the front steering cylinders (21) on the gooseneck steering mechanism (20) as seen in Diagram 2; and the direction and angle of movement of the modular platforms are determined by the rear steering cylinders (51) on the modular platform steering mechanism (50) as seen in Diagram 3. Front steering cylinders (21) transmit hydraulic fluid to variable displacement hydraulic distributor actuators (30 and 40) on the gooseneck by push pull action activated by maneuvers of tractor truck and variable displacement hydraulic distributor actuators (30 and 40) that are driven by front steering cylinders (21) transmit the hydraulic fluid to rear steering cylinders (51) on modular platforms. Then the rear steering cylinders (51) turn the wheel on the axle located on the same side with modular trailer platforms

Said front steering cylinders (21) and module steering cylinders (51) are double acting hydraulic cylinders. A double acting hydraulic cylinder is basically a piston and a shaft attached to that piston. The piston moves back and forth inside the cylinder body as a result of hydraulic pressure converting hydraulic pressure to linear motion through the cylinder shaft, driving the mechanism to which the piston is attached. Two hydraulic fluid transmission chambers are located at the rear of the piston in the cylinder and at the front of the cylinder shaft. The volume of transmitted hydraulic fluid varies due to the difference between the piston area and ring area on the shaft and piston side of double acting hydraulic cylinders.

Two actuators (1), namely the shaft side actuator (30) and the piston side actuator (40) are used in the hydraulic steering system (10) due to volumetric difference of double acting cylinders. Hydraulic lines leading from the piston chambers (4) of shaft side actuator (30) are connected to the shaft side of front and rear module steering cylinders (21, 51) and hydraulic lines leading from the piston chambers (4) of piston side actuator (40) are connected to the piston side of front and rear module steering cylinders (21, 51) as seen in diagram 1. Internal structures of shaft side actuator (30) and the piston side actuator (40) are geometrically similar and but dimensionally different.

Firstly optimum steering angles of the axles are determined on the basis of the steering mechanism designed mechanically by the mechanical system designer by using steering rods and tie rods, when designing the hydraulic steering system (10). Then maximum operating strokes of front and rear module steering cylinders (21, 51) are determined on the basis of this mechanism and required hydraulic fluid transmission volumes are calculated according to these strokes. The size of module piston chambers (4) of variable displacement hydraulic distributor actuators (30, 40) are calculated with varying diameters on the basis of calculated hydraulic fluid transmission volumes and the maximum operating stroke of the drive shaft (3). In principle, the strokes of all piston chambers (4) must be the same, only hydraulic fluid transmission volumes of piston chambers (4) will be different. Volumes of individual piston chambers (4) inside the actuator housing (2) are designed differently from each other as seen in A-A section view in diagram 5. Diameters of piston chambers (4) increase (or decrease) gradually from the upper end of the actuator (1) to the lower end. The volume of each piston chamber (4) is determined on the basis of the operating stroke of rear module steering cylinders (51) set according to pre calculated optimum steering angles of axle wheels of the module to which that piston chamber (4) is connected.

In the driving mode steering function, firstly the rotary plate mechanism on the gooseneck rotates with the maneuver of the tractor truck and then the front steering cylinders (21) connected to gooseneck rotary plate mechanism engage in push or pull action. Said front steering cylinders (21) drive the shaft side actuator (30) and the piston side actuator (40) by transmitting hydraulic fluid. These actuators (30, 40) in return transfer different volumes of hydraulic fluid to the rear module steering cylinders (51).

Gooseneck front steering cylinders (21) transmit hydraulic fluid to gooseneck drive compartment hydraulic fluid inlet/outlet chambers (4.1) on the shaft side actuator (30) and piston side actuator (40) according to the driving movement of the tractor truck. Then the gooseneck drive chamber pistons (5.1) of the actuators (30, 40) move the drive shafts to the left or to the right in a synchronized manner. The wheels connected to the axles on the gooseneck compartment turn at the specified angle as a result of this movement.

The first, second, third and fourth chamber pistons (5.2, 5.3, 5.4, 5.5) of the shaft and piston side actuators (30, 40) move to the right in a synchronized manner at the same time as a result of the movement of the drive shaft (3) to the right. At the same time, hydraulic fluid is transmitted to the shaft side of rear module steering cylinders (51) by the right hydraulic fluid ports of first chamber, second chamber, third chamber and fourth chamber (9.4, 9.6, 9.8, 9.10) of shaft side actuator (30) and to the piston side of rear module steering cylinders (51) by the right hydraulic fluid ports of first chamber, second chamber, third chamber and fourth chamber (9.4, 9.6, 9.8, 9.10) of piston side actuator (40). Simultaneously, the hydraulic fluid at the other shaft and piston sides of rear module steering system (51) returns to the respective chambers (4.2, 4.3, 4.4, 4.5) through the left hydraulic fluid inlet/outlet ports of first chamber, second chamber, third chamber and fourth chamber (9.3, 9.5, 9.7, 9.9) during operation of module steering cylinders (51).

The first, second, third and fourth chamber pistons (5.2, 5.3, 5.4, 5.5) of the shaft and piston side actuators (30, 40) move to the left in a synchronized manner at the same time as a result of the movement of the drive shaft (3) to the left. At the same time, hydraulic fluid is transmitted to the shaft side of rear module steering cylinders (51) by the left hydraulic fluid ports of first chamber, second chamber, third chamber and fourth chamber (9.3, 9.5, 9.7, 9.9) of shaft side actuator (30) and to the piston side of rear module steering cylinders (51) by the left hydraulic fluid ports of first chamber, second chamber, third chamber and fourth chamber (9.3, 9.5, 9.7, 9.9) of piston side actuator (40). Simultaneously, the hydraulic fluid at the other shaft and piston sides of rear module steering system (51) returns to the respective chambers (4.2, 4.3, 4.4, 4.5) through the right hydraulic fluid inlet/outlet ports of first chamber, second chamber, third chamber and fourth chamber (9.4, 9.6, 9.8, 9.10) during operation of module steering cylinders (51).

Modular platforms of modular trailers are interchangeable subject to certain restrictions or they can be entirely removed from the trailer combination. Steering angles must be adjusted according to their original configuration following such changes.

As described in the foregoing, when configurations of the modular trailer incorporating the modular steering system (10) constituting the subject of present invention operating with variable displacement hydraulic distributor actuators are altered, it is possible to change steering angles hydraulically. Quick coupling are connected to hydraulic fluid inlet/outlet ports (9) of piston chambers (4) for this purpose. The operator will be able to make any module steering cylinder (51) to operate at the desired stroke by simply changing the positions of said quick couplings. Thus steering angles will be changed through the Variable Displacement Hydraulic Distributor System.

The Variable Displacement Hydraulic Distributor System must be filled with hydraulic fluid up to its maximum capacity during initial commissioning at the factory assembly line. Moreover it should not contain any air. Pre filling valves (7) are installed between in-line piston chambers (4) in order to inter connect piston chambers (4) of Variable Displacement Hydraulic Distributor Actuator (1) during initial commissioning. Four pre filling valves (7), namely pre filling valve X1 (7.1), pre filling valve X2 (7.2), pre filling valve X3 (7.3) and pre filling valve X4 (7.4) are provided between piston chambers (4) as shown in Diagram 6. Pre filling valves function to shut and open transmission of hydraulic fluid between piston chambers (4).

When any module platform is entirely removed from the trailer configuration, chamber hydraulic fluid inlet/outlet ports (9) of the actuator (1) to which the rear steering cylinders (51) of the removed module are connected are deactivated. The chamber piston (5) inside the respective piston chamber (4) must be disabled in such cases. Thus the hydraulic fluid must circulate within that piston chamber (4). In order to do that, deactivation valves (8) that are connected to the front and rear displacements of the chamber piston of each piston chamber will be opened. Four deactivation valves (8), namely deactivation valve V1 (8.1), deactivation valve V2 (8.2), deactivation valve V3 (8.3) and deactivation valve V4 (8.4) are provided between piston chambers (4) as shown in Diagram 6.

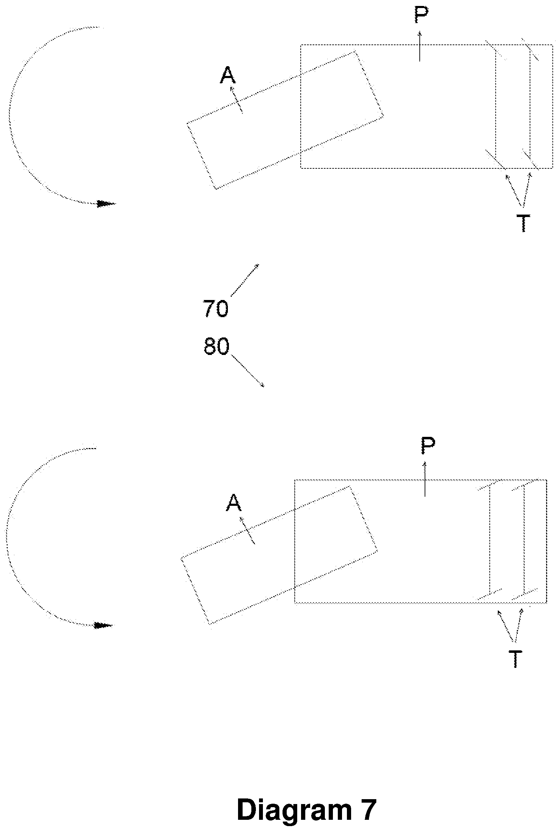

Hydraulic operation function of the steering system runs in two different modes. The first operation mode is the Driving Mode Steering Function (70). The second operation mode is the Externally Driven Forced Steering Function (80). Diagram 7 provides schematic views of the driving mode steering function (70) and the externally driven forced steering function (80). Schematic view in Diagram 7 shows that the wheels (T) turn to a different direction depending on the steering function/mode of the tractor truck (A), that is preferably turning to the left.

### Driving Mode Steering Function (70):

This function transfers the steering action to the rear wheels (T) at the opposite direction of the maneuver of the tractor truck (A) as a result of transmission of hydraulic fluid between front and rear module steering cylinders (21, 51) caused by the mechanical steering action initiated by the gooseneck, without losing any hydraulic fluid inside the closed circuit hydraulic system, when the tractor truck (A) maneuvers to the left or to the right. Using a pump is not required in the driving mode steering function (70) save for emergencies. Similarly electric power sources are not required either except for cases of emergency.

### Externally Driven Forced Steering Function (80):

The power of a hydraulic pump is required in cases where the capacity and capability of the steering action triggered by the maneuver of the tractor truck (A) in the driving mode is not sufficient or when the driver needs further capacity or capability. It is possible to control the rear wheels (T) independently from the maneuver of the tractor truck (A) by using an external control device, auxiliary power supply, and an auxiliary pump. For example, the wheels of the trailer (T) will turn to the right, the opposite direction, when the tractor truck (A) maneuvers to the left, in the driving mode steering function (70). If the operator wishes to turn the rear wheels to the left when the tractor truck (A) maneuvers to the left, then he/she must use auxiliary devices such as a remote control device and a hydraulic pump in the externally driven forced steering function (80).

The modular steering system (10), constituting the subject of present invention, employing variable displacement hydraulic distributor actuators (1) and/or any other variable displacement hydraulic distributor system is designed to accommodate these two functions (70, 80) that are described in the foregoing.

## Claims

1. A modular trailer hydraulic steering system (10) for modular trailers which have module platforms (P) at increasing or reducing numbers comprising a gooseneck steering mechanism (20) with front steering cylinders (21) located on the gooseneck compartment and a module platform steering mechanism (50) with rear steering cylinders (51) connected to said module platforms (P), the modular trailer hydraulic steering system (10) **incorporating the following components:**
• at least one variable displacement hydraulic distributor actuator (1) located on the gooseneck, which is driven by transmission of hydraulic fluid by said front steering cylinders (21) depending on the direction of movement of the tractor truck or hydraulically by an auxiliary pump and determining steering angles of said module platforms (P) by transferring hydraulic fluid to said rear steering cylinders (51),
• a cylindrical actuator housing (2) and a drive shaft (3) driven by front steering cylinders (51) and located in said actuator housing (2) which are forming said variable displacement hydraulic distributor actuator (1)
• chamber pistons (5) inside said variable displacement hydraulic distributor actuator housing (2) that move back and forth for circulation of hydraulic fluid between variable displacement hydraulic distributor actuator (1), front steering cylinders (21) and rear module steering cylinders (51) to enable the gooseneck compartment and modular platforms for turning at specified angles,
• piston chambers (4) housing said chamber pistons (5), designed at different hydraulic fluid transmission volumes but equal stroke,
• hydraulic fluid inlet/outlet ports (9) that are located on each piston chamber (4), making the connections that are necessary for circulating hydraulic fluid in and out of said piston chambers.

2. A modular trailer hydraulic steering system (10) of Claim 1 or Claim 2, incorporating a minimum of one pre filling valve (7) connecting said piston chambers (4) each other, that is opened during initial filling of hydraulic fluid to variable displacement hydraulic distributor actuator (1) or in case of loss of hydraulic fluid in order to pump hydraulic fluid to the respective piston chamber (4).

3. A modular trailer hydraulic steering system (10) of Claim 1 or Claim 2, incorporating a minimum of one deactivation valve (8) connected to each individual piston chamber (4) that is opened to circulate hydraulic fluid within the connected chamber (4), bypassing and deactivating the respective hydraulic line.

4. A modular trailer hydraulic steering system (10) of Claim 1 or Claim 2, incorporating two variable displacement hydraulic distributor actuators (1), namely a shaft side actuator (30) connected to the shaft side of pistons and a piston side actuator (40) connected to the piston side in the hydraulic steering system (10), to balance the volumetric difference between the hydraulic fluid transmission volumes of the shaft and piston sides of double acting front steering cylinders (21) and module steering cylinders (51).

5. A modular trailer hydraulic steering system (10) of Claim 1 or Claim 2, incorporating hydraulic quick couplings, establishing the connection between said hydraulic fluid inlet/outlet ports (9), front steering cylinders (21) and module steering cylinders (51) of said variable displacement hydraulic distributor actuator (1), the position of which is changed to adapt steering angles of respective module steering cylinder (51) to the new configuration when module configurations of the modular trailer are altered.

## Patentansprüche

1. Modulares hydraulisches Anhängerlenksystem (10) für modulare Anhänger, die Modulplattformen (P) in zunehmender oder abnehmender Anzahl aufweisen, die einen Schwanenhals-Lenkmechanismus (20) mit vorderen Lenkzylindern (21), die sich auf dem Schwanenhalsfach befinden, und einen Modulplattform-Lenkmechanismus (50) mit hinteren Lenkzylindern (51) umfassen, die mit den Modulplattformen (P) verbunden sind, wobei das modulare hydraulische Anhängerlenksystem (10) **folgende Komponenten enthält:**
• mindestens einen hydraulischen Verteilerstellantrieb (1) mit variabler Verdrängung, der sich am Schwanenhals befindet und angetrieben wird durch Übertragung von Hydraulikflüssigkeit durch die vorderen Lenkzylinder (21) je nach Fahrtrichtung der Zugmaschine oder hydraulisch durch eine Hilfspumpe und Bestimmen von Lenkwinkeln der Modulplattformen (P) durch Übertragen von Hydraulikflüssigkeit zu den hinteren Lenkzylindern (51),
• ein zylindrisches Stellantriebsgehäuse (2) und eine Antriebswelle (3), die von vorderen Lenkzylindern (51) angetrieben wird und sich in dem Stellantriebsgehäuse (2) befindet, die den hydraulischen Verteilerstellantrieb (1) mit variabler Verdrängung bilden
• Kammerkolben (5) im Inneren des Gehäuses (2) des hydraulischen Verteilerstellantriebs mit variabler Verdrängung, die sich zur Zirkulation von Hydraulikflüssigkeit zwischen hydraulischem Verteilerstellantrieb (1) mit variabler Verdrängung, vorderen Lenkzylindern (21) und hinteren Modullenkzylindern (51) hin- und herbewegen, um zu ermöglichen, dass sich das Schwanenhalsfach und die Modulplattformen in bestimmten Winkeln drehen,
• Kolbenkammern (4), die die Kammerkolben (5) aufnehmen und die auf unterschiedliche Hydraulikflüssigkeitsübertragungsvolumina, aber gleichen Hub ausgelegt sind,
• Hydraulikflüssigkeitseinlass-/auslassöffnungen (9), die sich an jeder Kolbenkammer (4) befinden, wobei sie die Verbindungen herstellen, die zum Zirkulieren von Hydraulikflüssigkeit in und aus den Kolbenkammern notwendig sind.

2. Modulares hydraulisches Anhängerlenksystem (10) nach Anspruch 1 oder Anspruch 2, enthaltend
ein Minimum von einem Vorfüllventil (7), das die Kolbenkammern (4) miteinander verbindet und das während der Erstbefüllung von Hydraulikflüssigkeit zum hydraulischen Verteilerstellantrieb (1) mit variabler Verdrängung oder im Fall von Hydraulikflüssigkeitsverlust geöffnet wird, um Hydraulikflüssigkeit in die jeweilige Kolbenkammer (4) zu pumpen.

3. Modulares hydraulisches Anhängerlenksystem (10) nach Anspruch 1 oder Anspruch 2, enthaltend mindestens ein Deaktivierungsventil (8), das mit jeder einzelnen Kolbenkammer (4) verbunden ist, das geöffnet wird, um Hydraulikflüssigkeit innerhalb der verbundenen Kammer (4) zu zirkulieren, wobei die jeweilige Hydraulikleitung umgangen und deaktiviert wird.

4. Modulares hydraulisches Anhängerlenksystem (10) nach Anspruch 1 oder Anspruch 2, enthaltend zwei hydraulische Verteilerstellantriebe (1) mit variabler Verdrängung, nämlich einen wellenseitigen Stellantrieb (30), der mit der Wellenseite der Kolben verbunden ist, und einen kolbenseitigen Stellantrieb (40), der mit der Kolbenseite im hydraulischen Lenksystem (10) verbunden ist, um die volumetrische Differenz zwischen den Hydraulikflüssigkeitsübertragungsvolumina der Wellen- und Kolbenseiten von doppeltwirkenden vorderen Lenkzylindern (21) und Modullenkzylindern (51) auszugleichen.

5. Modulares hydraulisches Anhängerlenksystem (10) nach Anspruch 1 oder Anspruch 2, enthaltend hydraulische Schnellkupplungen, die die Verbindung zwischen den Hydraulikflüssigkeitseinlass-/auslassöffnungen (9), vorderen Lenkzylindern (21) und Modullenkzylindern (51) des hydraulischen Verteilerstellantriebs (1) mit variabler Verdrängung herstellen, dessen Position geändert wird, um Lenkwinkel des jeweiligen Modullenkzylinders (51) an die neue Konfiguration anzupassen, wenn Modulkonfigurationen des modularen Anhängers geändert werden.

## Revendications

1. Système de direction hydraulique de remorque modulaire (10) pour remorques modulaires qui comportent des plates-formes de modules (P) à nombre croissant ou décroissant, comprenant un mécanisme de direction à col de cygne (20) avec des vérins de direction avant (21) situés sur le compartiment à col de cygne et un mécanisme de direction à plate-forme de module (50) avec des vérins de direction arrière (51) raccordés auxdites plates-formes de module (P), le système de direction hydraulique de remorque modulaire (10) **intégrant les composants** suivants :
• au moins un actionneur de distributeur hydraulique à cylindrée variable (1) situé sur le col de cygne, qui est entraîné par transmission de fluide hydraulique par lesdits vérins de direction avant (21) en fonction du sens de déplacement du camion tracteur ou hydrauliquement par une pompe auxiliaire et déterminant les angles de braquage desdites plates-formes de module (P) en transférant du fluide hydraulique auxdits vérins de direction arrière (51),
• un boîtier d'actionneur cylindrique (2) et un arbre d'entraînement (3) entraîné par des vérins de direction avant (51) et situé dans ledit boîtier d'actionneur (2) qui forment ledit actionneur de distributeur hydraulique à cylindrée variable (1)
• des pistons de chambre (5) à l'intérieur dudit boîtier d'actionneur de distributeur hydraulique à cylindrée variable (2) qui se déplacent d'avant en arrière pour la circulation du fluide hydraulique entre l'actionneur de distributeur hydraulique à cylindrée variable (1), les vérins de direction avant (21) et les vérins de direction de module arrière (51) pour permettre au compartiment à col de cygne et aux plates-formes modulaires de tourner à des angles spécifiés,
• des chambres de piston (4) renfermant lesdits pistons de chambre (5), conçues à des volumes de transmission de fluide hydraulique différents mais à course égale,
• des orifices d'entrée/sortie de fluide hydraulique (9) qui sont situés sur chaque chambre de piston (4), réalisant les connexions qui sont nécessaires pour faire circuler le fluide hydraulique dans et hors desdites chambres de piston.

2. Système de direction hydraulique de remorque modulaire (10) selon la revendication 1 ou la revendication 2, incorporant un minimum d'une une vanne de pré-remplissage (7) raccordant lesdites chambres de piston (4) l'une à l'autre, qui est ouverte pendant le remplissage initial de fluide hydraulique dans l'actionneur de distributeur hydraulique à cylindrée variable (1) ou en cas de perte de fluide hydraulique afin de pomper du fluide hydraulique vers la chambre de piston (4) respective.

3. Système de direction hydraulique de remorque modulaire (10) selon la revendication 1 ou la revendication 2, incorporant au moins une vanne de désactivation (8) raccordée à chaque chambre de piston (4) individuelle qui est ouverte pour faire circuler le fluide hydraulique à l'intérieur de la chambre (4) raccordée, en contournant et en désactivant la conduite hydraulique respective.

4. Système de direction hydraulique de remorque modulaire (10) selon la revendication 1 ou la revendication 2, incorporant deux actionneurs de distributeur hydraulique à cylindrée variable (1), à savoir un actionneur côté arbre (30) raccordé au côté arbre des pistons et un actionneur côté piston (40) connecté au côté piston dans le système de direction hydraulique (10), pour équilibrer la différence volumétrique entre les volumes de transmission de fluide hydraulique des côtés arbre et piston des vérins de direction avant à double effet (21) et des vérins de direction de module (51).

5. Système de direction hydraulique de remorque modulaire (10) selon la revendication 1 ou la revendication 2, incorporant des raccords rapides hydrauliques, établissant le raccordement entre lesdits orifices d'entrée/sortie de fluide hydraulique (9), les cylindres de direction avant (21) et les cylindres de direction de module (51) dudit actionneur de distributeur hydraulique à cylindrée variable (1), dont la position est modifiée pour adapter les angles de braquage du vérin de direction de module (51) respectif à la nouvelle configuration lorsque les configurations de module de la remorque modulaire sont modifiées.
